Europäisches Patentamt

European Patent Office

Office européen des brevets

(19)

(11) **EP 0 937 588 A2**

(12) **EUROPEAN PATENT APPLICATION**

(43) Date of publication:
25.08.1999 Bulletin 1999/34

(51) Int. Cl.$^6$: **B60C 9/18**

(21) Application number: 99102590.9

(22) Date of filing: 11.02.1999

(84) Designated Contracting States:
**AT BE CH CY DE DK ES FI FR GB GR IE IT LI LU MC NL PT SE**
Designated Extension States:
**AL LT LV MK RO SI**

(30) Priority: **19.02.1998 US 26877**

(71) Applicant:
**THE GOODYEAR TIRE & RUBBER COMPANY**
**Akron, Ohio 44316-0001 (US)**

(72) Inventors:
• **Bhagwat, Anand Waman**
**Hudson, Ohio 44236 (US)**
• **Prakash, Amit**
**Hudson, Ohio 44236 (US)**
• **Woods, Terry Kenneth**
**Canton, Ohio 44708 (US)**

(74) Representative: **Leitz, Paul**
**Goodyear Technical Center-Luxembourg**
**Patent-Department**
**L-7750 Colmar-Berg (LU)**

(54) **Radial tires containing strands of untwisted steel filaments in a belt ply layer**

(57)     The present invention relates to a pneumatic tire (10) with a radial carcass having a crown region, a tread disposed radially outwardly of the crown region and at least two belt ply layers (20,22) located between the tread (18) and the crown region of the carcass. At least one ply contains a rubberized layer of steel strands (24,26) of untwisted filaments (42,44,46,48;62,64,66).

FIG-1

EP 0 937 588 A2

## Description

### Technical Field

The present invention relates to a radial tire containing strands of untwisted steel filaments in a belt ply layer of the tire.

### Background of the Invention

US-A- 4 371 025 discloses a radial tire having an annular reinforcing structure comprising at least two layers of steel monofilaments arranged on a carcass having a radius of curvature, on the meridian plane in the crown point, equal to or greater than 400 mm. The monofilaments preferably have a specific tensile strength of at least 2000 $N/mm^2$, a modulus of elasticity of 205,000 $N/mm^2$, an elongation of 1.4 percent for a stress equal to 100 percent of the tensile strength.

US-A- 4 840 214 describes a tire belt reinforcing strip having a significantly higher bending stiffness in the plane of the strip than in the longitudinal plane perpendicular thereto. The strip is in the form of a bundle of steel wires having flattened sides and the adjacent wires are bound to each other by means of a wrapping wire or adhesive.

US-A- 5 234 044 describes a tire having a belt portion having a rubber portion and a plurality of reinforcing strips. Each strip is in the form of a bundle of four to seven single steel wires positioned side by side and each wire has a round cross-section. The adjacent wires are bound to each other with an adhesive other than the rubber in the rubber portion of the belt.

### Summary of the Invention

The present invention relates to a pneumatic radial tire having a belt ply which comprises a layer of steel strands of untwisted steel filaments wherein the average distance in the cross-sectional direction of each strand is less than 0.97 x (D x n) where n is the number of filaments and D is the diameter of the filament in millimeters.

### Brief Description of the Drawing

Figure 1 shows a pneumatic tire in partial sectional view.
Figure 2 illustrates a radial cross-section through a radial carcass tire having two belt plies.
Figure 3 is a fragmentary cross-sectional view of a steel strand having four untwisted round filaments where the distance in the cross-sectional direction of the strand is less than 0.97 x (D x n).
Figure 4 is a fragmentary cross-sectional view of a steel strand having three untwisted round filaments where the distance in the cross-sectional direction of the strand is less than 0.97 x (D x n).
Figure 5 is a fragmentary cross-sectional view of a steel strand having four untwisted round filaments where the distance in the cross-sectional direction of the strand is more than 0.97 x (D x n).
Figure 6 illustrates a fragmentary cross-sectional view of a steel strand having three untwisted filaments where the distance in the cross-sectional direction of the strand is more than 0.97 x (D x n).
Figure 7 illustrates a radial cross-section through a radial carcass tire having four belt plies.

### Detailed Description of the Invention

There is disclosed a pneumatic radial tire comprising:

(a) a radial carcass having a crown region;
(b) a tread disposed radially outwardly of said crown region; and
(c) at least two belt ply layers located between the tread and the crown region of the carcass, wherein at least one of said belt ply layers is composed of a rubber reinforcing layer having embedded therein a plurality of spaced-apart parallel steel strands inclined at an angle between 10° to 75° with respect to the equatorial plane,
each said strand having

(1) from 3 to 12 untwisted filaments;
(2) the diameter of each filament ranging from 0.10 to 0.50 mm;
(3) the tensile strength of each filament of at least (3000 MPa - (2000 x D)) x 95 percent, where D is the filament diameter in millimeters; and
(4) the average diameter of the smallest circle enveloping the cross-sectional area of each strand is less than 0.97 x (D x n) where n is the number of filaments in the strand.

As used herein and in the claims:

"Axial" and "axially" are used herein to refer to lines or directions that are parallel to the axis of rotation of the tire.
"Bead" means that part of the tire comprising an annular tensile member wrapped by ply cords and shaped, with or without other reinforcement elements such as flippers, chippers, apexes, toe guards and chafers, to fit the design of the tire rim.
"Belt structure" means at least two rubber reinforced annular layers of plies of parallel cords, underlying the tread, unanchored to the bead, and having both left and right cord angles in the range from 10 to 75 degrees with respect to the equatorial plane (EP) of the tire. A belt ply may comprise a singular annular layer but has two or more segments.

"Carcass" means the tire structure apart from the belt structure, the tread and the undertread, but including the beads. The carcass ply includes reinforcing cords embedded in an elastomeric substance and that these components are considered to be a single entity. The "main portion of the carcass ply" means the portion of the carcass ply which extends between the bead cores.

"Cord" means one or more of the reinforcement elements, formed by one or more filaments/wires which are twisted together having a lay length less than infinity.

"Crown" means that portion of the tire within the width limits of the tire tread.

"Equatorial plane (EP)" means the plane perpendicular to the tire's axis of rotation and passing through the center of the tire's tread.

"Load Range" means load and inflation limits for a given tire used in a specific type of service as defined by tables in The Tire and Rim Association, Inc. 1995 Year Book.

"Ply" means a continuous layer of rubber-coated parallel filaments or cords.

"Pneumatic tire" means a laminated mechanical device of generally toroidal shape (usually an open-torous) having beads, a carcass ply and a tread.

"Tread" means a molded rubber component which, when bonded to a tire casing, includes that portion of the tire that comes into contact with the road when the tire is normally inflated and under normal load.

"Prefix Letters" means those identifications used and defined in The Tire and Rim Association, Inc. 1995 Year Book.

"Radial" and "radially" are used to mean directions radially perpendicular from the axis of rotation through the tire.

"Radial-ply tire" means a belted or circumferentially restricted pneumatic tire in which the carcass ply reinforcements which extend from bead to bead are laid at angles between 75° and 105° with respect to the equatorial plane of the tire.

"Rivet" means the open space between cords or strands in a layer.

"Tensile strength" is determined by ASTM E8M-93 as applied to steel wire product.

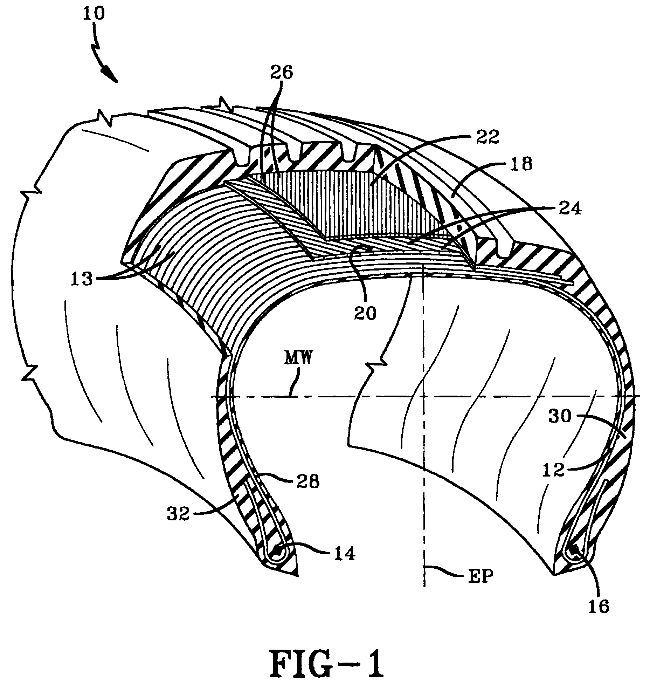

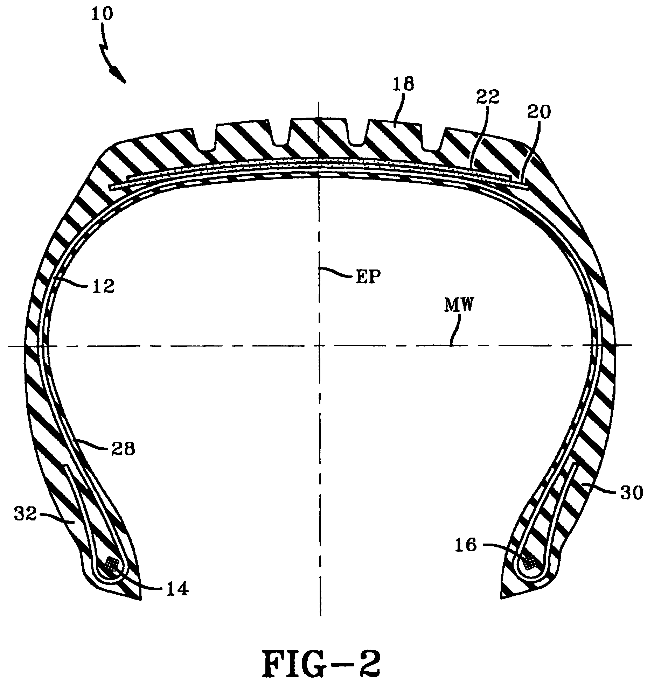

Referring to Figures 1 and 2, the present invention relates to a pneumatic tire 10. When mounted on the wheel of a motor vehicle, the tire through its tread provides traction and contains the fluid that sustains the vehicle load. More specifically, the present invention relates to a radial-ply tire. Radial-ply tire means a belted or circumferentially-restricted pneumatic tire in which the carcass ply reinforcement which extend from bead to bead are laid at angles between 75° and 105° with respect to the equatorial plane of the tire.

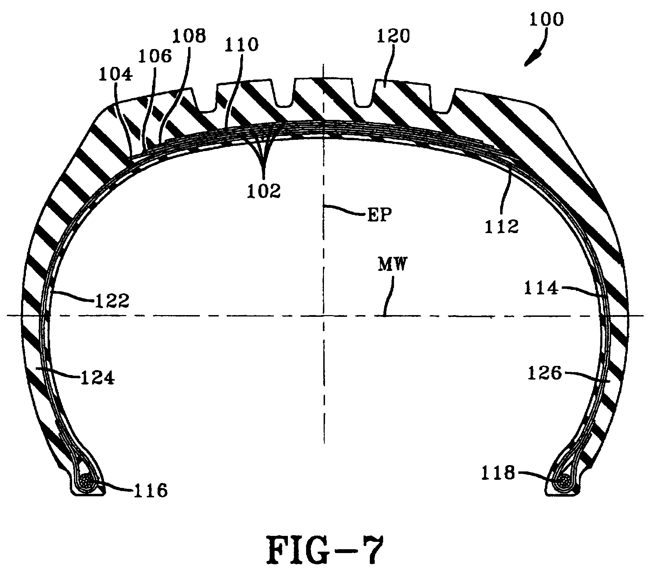

Referring to Figure 1, the present invention relates to a pneumatic tire 10. The pneumatic tire 10 has a carcass ply 12 incorporating a plurality of rubber-coated parallel cords 13. Whereas only one carcass ply 12 is shown, more than one carcass ply may be used as shown in Figure 6 and later described. In fact, 6 or 8 plies may be used.

There are a number of specific organic fiber or metallic cord constructions for use in the carcass ply 12. The cords 13 for use in the carcass ply 12 may comprise from one (monofilament) to multiple filaments. The number of total filaments in the cord may range from 1 to 27. The individual diameter of each filament generally ranges from .15 to .30 mm for each filament. Preferably, the diameter of each filament ranges from .15 mm to .22 mm. Representative examples of specific cord constructions include $1 \times$, $2 \times$, $3 \times$, $4 \times$, $5 \times$, $6 \times$, $7 \times$, $8 \times$, $11 \times$, $12 \times$, $1 + 2$, $1 + 4$, $1 + 5$, $1 + 6$, $1 + 7$, $1 + 8$, $2 + 1$, $3 + 1$, $5 + 1$, $6 + 1$, $11 + 1$, $12 + 1$, $2 + 7$, $2 + 7 + 1$, $3 + 9$, $1 + 5 + 1$ and $1 + 6 + 1$ or $3 + 9 + 1$. The most preferred cord constructions including filament diameters (in terms of millimeters) are $3 \times .18$, $1 + 5 \times .18$, $1 + 6 \times .18$, $2 + 7 \times .18$, $2 + 7 \times .18 \times 1 \times .15$, $3 + 9 \times .18 + 1 \times .15$, $3 + 9 \times .18$, $3 \times .20 + 9 \times .18$ and $3 \times .20 + 9 \times .18 + 1 \times .15$. The above cord designations are understandable to those skilled in the art. For example, designations such as $2 \times$, $3 \times$ and $4 \times$ mean a bunch of twisted filaments; ie, two filaments, three filaments, four filaments and the like. Designations such as $1 + 2$ and $1 + 4$ indicate, for example, a single filament wrapped by two or four filaments.

The above cord constructions may be composed of nonmetallic material or steel. Representative of nonmetallic materials include rayon, polyester, glass fiber aramid, carbon fiber and nylon. Preferably, the cord construction for the carcass is steel.

The carcass ply 12 has a layer of the above-described cords 13 arranged so as to have from 5 to 70 ends per inch ($\approx$ 2 to 28 ends per cm) when measured in a tire circumferential direction at a location having a tire maximum width (MW). Preferably, the layer of cords are arranged so as to have 7 to 20 ends per inch ($\approx$ 2.7 to 8 ends per cm) at MW. The above calculations for ends per inch are based upon the range of diameters for the cord, strength of the cord and the practical strength requirement for the carcass ply. For example, the high number of ends per inch would include the use of a lower diameter cord for a given strength versus a lower number of ends per inch for a higher diameter wire for the same strength. In the alternative, if one elects to use a cord of a given diameter, one may have to use more or less ends per inch depending on the strength of the cord.

The steel cord 13 of the carcass ply 12 intersect the equatorial plane (EP) of the tire at an angle in the range of from 75° to 105°. Preferably, the steel cords intersect at an angle of from 82° to 98°. The preferred range is from 89° to 91°.

The pneumatic tire 10 has a pair of axially spaced-apart annular beads 14, 16. The carcass ply 12 extends between the beads 14, 16. The pneumatic tire 10 has a conventional tread 18 disposed on the crown of the carcass 12.

The pneumatic tire 10 has a belt structure comprising at least two belts 20, 22. A critical aspect of the present invention is a belt structure comprising at least two plies 20, 22 at least one of which is reinforced with parallel steel strands 24, 26. For example, one or both belt plies may be reinforced with the steel strands. In the instance where only one belt is reinforced with the steel strands, it may be the top belt 22 or the bottom belt 20. Preferably, both belts are reinforced with the steel strands.

The belt ply having a layer of parallel steel strands 24, 26 of untwisted filaments is arranged so as to have from 8 to 40 ends per inch. As can be appreciated by one skilled in the art, EPI or ends per inch is measured in a direction perpendicular to the parallel strands. Preferably, the layer of steel strands 24, 26 is arranged so as to have 12 to 28 ends per inch. In a particularly preferred tire, the layer of steel strands 24, 26 is arranged so as to have 18 to 24 ends per inch.

The rivet between the strands in the belt layer may range from 0.15 to 2.5 mm. Preferably, the rivet ranges from 0.3 to 1.2 mm. The above calculations for ends per inch and rivet are based upon the range of diameters for the strand, diameter of the filament, strength of the strand, strength of the filament and the practical strength requirement for the belt ply. For example, the high number of ends per inch would include the use of a lower diameter strand for a given strength versus a lower number of ends per inch for a lower diameter strand for the same strength. In the alternative, if one elects to use a strand of a given diameter, one may have to use more or less ends per inch depending on the tensile strength of the filaments.

The diameter of each filament in the strand may vary from 0.10 to 0.5 mm. Preferably, the diameter of each strand will be from 0.20 to 0.40 mm.

The number of filaments in each strand will range from 3 to 12 filaments. Preferably, the number of filaments in each strand range from 3 to 7.

Because the strands used in the present invention have untwisted filaments, such filaments within a strand may have minor movement relative to other filaments in the strand prior to final vulcanization of the tire. Namely, such movement may occur during the vulcanization of the green tire. All of the filaments are, however, substantially parallel to each other. Therefore, the cross-sectional profile (as measured in a circumferential direction) of the strand may have minor variances along the belt ply.

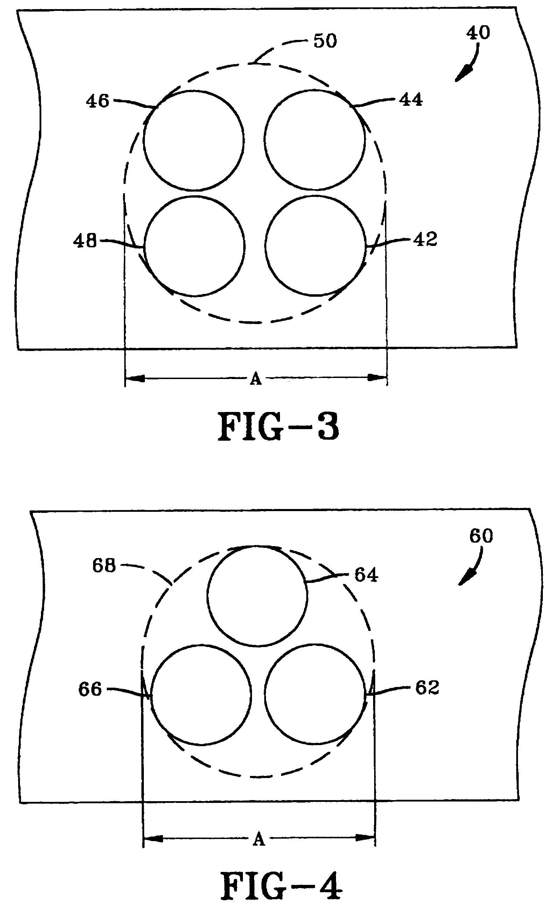

The diameter of the smallest circle enveloping the cross-sectional area of each strand is less than 0.97 x (D x n). For example, Figure 3 is a fragmentary cross-sectional view of a steel strand 40 having four untwisted round filaments 42,44,46,48. As can be seen, the diameter A of the smallest circle 50 enveloping the cross-sectional area of the strand 40 as shown by dotted line 50 is less than .97 x (diameter of each filament x 4). In a case where the diameter of each filament is .20 mm and the number of filaments equal 4, the diameter A of the smallest circle 50 enveloping the cross-sectional area of the strand 50 must be less than 0.776 mm.

A further embodiment is shown in Figure 4. Figure 4 is a fragmentary cross-sectional view of a steel strand 60 having three untwisted round filaments 62,64,66. As can be seen, the diameter A of the smallest circle 68 enveloping the cross-sectional area of the strand 60 is less than 0.97 x (diameter of each filament x 3) . In a case where the diameter of each filament is 0.3 mm and the number of filaments equal 3, the diameter A of the smallest circle 68 enveloping the cross-sectional area of the strand 60 must be less than 0.873 mm.

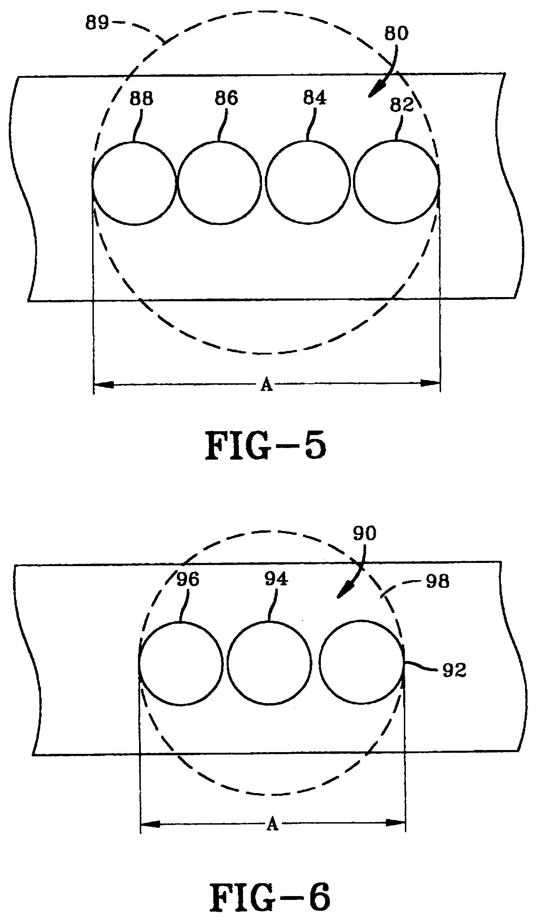

Figure 5 is fragmentary cross-sectional view of a steel strand 80 having four untwisted round filaments 82,84,86,88 and which the diameter A of the smallest circle 89 enveloping the cross-sectional area of such strand 80 is more than 0.97 x (D x n). For example, it must exceed 1.00 x (D x n) because the strand 80 is flat with the parallel filaments 82,84,86,88 extending side by side in one plane when the bundle is in a free straight position. Stated another way, because each filament is aligned side by side, the diameter of the smallest circle 89 enveloping the cross-sectional area of the strand will be at a minimum the sum of the diameter of all the filaments in the strand. Any belt ply layer having the strand 80 of Figure 5 would have a significantly higher bending stiffness in the plane of the belt than in the longitudinal plane perpendicular thereto.

Figure 6 is a fragmentary cross-sectional view of another strand 90 that does not meet the criteria of the present invention. Figure 6 shows a steel strand 90 having three untwisted round filaments 92,94,96. The diameter of the smallest circle 98 enveloping the cross-section area of the strand 90 is more than 0.97 x (D x n). In a case where the diameter of each filament is 0.3 mm and the number of filaments equal 3, the diameter A of the smallest circle 98 enveloping the cross-sectional area of the strand 90 of Figure 6 will be 1.00 x (D x n) or 0.90 mm, plus any distance associated between the individual filaments.

The pneumatic tire 10 of the present invention is characterized by the use of strands of untwisted filaments, each having high tensile strength values. Each filament for use in the strands have a tensile strength of at least (3000 MPa -(2000 x D)) x 95 percent where D is the filament diameter in millimeters. Preferably, the tensile strength of each filament is at least (4080 MPa - (2000 x D)) x 95 percent. In fact, tensile strengths greater than (4400 MPa - 12000 x D)) x 95 percent can be used. As known to those skilled in the art, tensile strength of an individual filament is generally measured according to ASTM E8M-90a.

There are a number of metallurgical embodiments which result in the tensile strength defined above. One way of achieving such strength is by merging the proper processes and alloys as disclosed in US-A- 4 960 473 and 5 066 455 which are hereby incorporated by reference in its entirety herein, with a steel rod microalloyed with one or more of the following elements: Ni, Cr, Nb, Si, Mo, Mn, Cu, Co, V and B. The preferred chemistry is listed below in weight percentages:

| C | 0.70 to 1.0 |
|---|---|
| Mn | 0.30 to 0.50 |
| Si | 0.10 to 0.30 |
| Cr | 0 to 0.4 |
| V | 0 to 0.1 |
| Cu | 0 to 0.5 |
| Ni | 0 to 0.5 |
| Co | 0 to 0.1 |

the balance being iron and residuals. The resulting rod is then drawn to the appropriate tensile strength.

Another critical property of the steel filaments for use in the strands 30 is that the total elongation for the wire must be at least 2 percent over a gauge length of 25 centimeters. Total elongation is measured according to ASTM E8M-90a. Preferably, the total elongation ranges from 2 percent to 4 percent. A particularly preferred total elongation ranges from 2.3 to 3.0.

The torsion values for the steel filaments for use in the strand should be at least 20 turns with a gauge length of 200 times the diameter of the wire. Generally, the torsion value ranges from 20 to 100 turns. Preferably, the torsion values range from 30 to 80 turns with a range of from 35 to 55 being particularly preferred. The torsion values are determined according to ASTM Test Method E 558-83 with test lengths of 200 times the diameter of the wire.

Representative of the type of steel filaments that may be used in the strands include the filaments disclosed in SA- 91/2134 having a tensile strength of 3,650 megapascals and a diameter of 0.20 millimeters.

If the tire is of the tubeless variety, a substantially air impervious layer 28 is disposed inwardly of the carcass ply 12 and contiguous to an inflation chamber defined by the volume bounded by the tire 10 and rim assembly (not shown) . Most preferably a barrier layer (not shown) is disposed between the air impervious layer 28 and the carcass ply 12. The barrier ply functions to separate the air impervious layer from the elastomeric layer in which the steel strands of untwisted filaments of the carcass ply 12 are embedded. Elastomeric sidewalls 30, 32 are disposed axially outwardly of the carcass structure.

Referring to Figure 7, one embodiment of the present invention is a pneumatic tire 100 having a belt structure 102 containing four belt ply layers 104,106,108,110. In such an embodiment, the steel strands may be located in all or any one of the four belt ply layers 104,106,108,110. Preferably, the lower three belts 104,106 and 108 contain steel strands. In an alternative embodiment, more than four belts may be used; for example, 6,8,10 belts ply layers may be used. The tire 100 of Figure 7 has two carcass plies 112,114. When the pneumatic tire 100 has two carcass plies, the cords of one carcass ply intersect the EP at a right angle in the range of from 85° to 95° and the cords of the other carcass ply intersect EP at an opposite or left angle in the range of from 85° to 95°. Similar to the monoply carcass of Figures 1 and 2, each carcass ply 112,114 may be reinforced with nonmetallic materials and/or steel. The pneumatic tire 100 has a pair of axially spaced-apart annular beads 116,118. The pneumatic tire has a conventional tread 120 disposed on the crown of the tire. The tire 100 of Figure 7, if of the tubeless variety, may have a substantially air impervious layer 122 that is disposed inwardly of the carcass ply 112 and contiguous to an inflation chamber defined by the volume bounded by the tire 100 and rim assembly (not shown). Elastomeric sidewalls 124,126 are disposed axially outwardly of the carcass structure.

The use of steel strands of untwisted filaments in the carcass as disclosed herein may be applied to general passenger radial tires as well as racing tires, agricultural tires, motor cycles, small or medium size truck tires and leisure vehicle tires. Preferably, the pneumatic tires of the present invention are directed to passenger tires and medium to light truck tires.

The pneumatic tires of the present invention may be designed for various load ranges. For example, the load ranges may be A, B, C, D or E. Preferably, the load range is E.

The pneumatic tires of the present invention may also be designated by various prefix letters depending on the designed service conditions requiring different loads and inflations. For example, the tires may be designated by AT, LT, P and ST. Preferably, the pneumatic tire is LT.

**Claims**

1. A pneumatic radial tire (10) characterized by:

    (a) a radial carcass (12) having a crown region;
    (b) a tread (18) disposed radially outwardly of said crown region; and
    (c) at least two belt ply layers (20,22) located between the tread (18) and the crown region of the carcass, wherein at least one of said belt ply layers is composed of a rubber reinforcing layer having embedded therein a plurality of spaced-apart parallel steel strands (24,26) inclined at an angle between 10° to 75° with respect to the equatorial plane (EP), each said strand having

(1) from 3 to 12 untwisted filaments (42,44,46,48;62,64,66);
(2) the diameter of each filament ranging from 0.10 to 0.50 mm;
(3) the tensile strength of each filament of at least (3000 MPa -(2000 x D)) x 95 percent, where D is the filament diameter in millimeters; and
(4) the average diameter of the smallest circle (50) enveloping the cross-sectional area of each strand is less than 0.97 x (D x n) where n is the number of filaments in the strand.

2. The pneumatic tire (10) of claim 1 characterized in that the strands (24,26) in belt ply layer (20,22) are arranged so as to have from 8 to 40 ends per inch when measured in a direction perpendicular to the parallel steel strands (24,26).

3. The pneumatic tire (10) of claim 1 characterized in that the only means by which the untwisted filaments (42,44,46,48;62,64,66) in a strand are bound to adjacent filaments within the same strand is the surrounding rubber in the rubber reinforcing layer of the belt ply layer (20,22).

4. The pneumatic tire (10) of claim I characterized in that each filament has a total elongation of at least 2 percent over a gauge length of 25 centimeters.

5. The pneumatic tire (10) of claim 1 characterized in that each filament has a torsion value of at least 20 turns with a gauge length of 200 turns the diameter of the filament.

6. The pneumatic tire (10) of claim 1 characterized in that each filament has a tensile strength of at least

(4080 MPa - (2000 x D)) x 95 percent

7. The pneumatic tire (10) of claim 1 characterized in that each filament has a tensile strength of at least

(4400 MPa -(2000 x D)) x 95 percent

8. The pneumatic tire (10) of claim 1 characterized in that the number of filaments in each strand ranges from 3 to 7.

9. The pneumatic tire (10) of claim 1 characterized in that the diameter of each filament ranges from 0.20 to 0.40 mm.

10. The pneumatic tire (10) of claim 1 characterized in that said tire has two belt ply layers (20,22).

11. The pneumatic tire (10) of claim 1 characterized in that said tire has four belt ply layers (104,106,108,110).

12. The pneumatic tire (10) of claim 10 characterized in that one of said belt ply (20,22) is reinforced with said strands and the other belt ply (22,20) layer is not reinforced with said strands.

13. The pneumatic tire (10) of claim 12 characterized in that said belt ply layer (20,22) that is not reinforced with said strands is reinforced with a nonmetallic filament selected from the group consisting of rayon, polyester, glass fiber, aramid, carbon fiber and nylon.

FIG-1

FIG-2

FIG-3

FIG-4

FIG-5

FIG-6

FIG-7